# EUROPÄISCHE PATENTANMELDUNG

(11) **EP 2 551 137 A2**
(43) Veröffentlichungstag der Anmeldung: **30.01.2013**
(21) Anmeldenummer: 12177767.6
(22) Anmeldetag: 25.07.2012
(51) Int. Cl.: B60J 5/10

(54) **Tür für einen Aufbau eines Nutzfahrzeuges**

(30) Priorität: 27.07.2011 DE 202011050824 U
(71) Anmelder: Kottkamp, Uwe, 32312 Lübbecke (DE)
(72) Erfinder: Kottkamp, Uwe, 32312 Lübbecke (DE)
(74) Vertreter: Dantz, Jan Henning

(57) **Zusammenfassung**

Tür (11) für einen Aufbau (10) eines Nutzfahrzeuges, mit zwei Türflügeln (12, 13), die mit ihren einander abgewandt liegenden Randbereichen durch mindestens zwei beabstandete Scharniere (14) an dem Aufbau (10) anschlagbar sind, wobei jedes Scharnier (14) aus zwei Scharnierarmen (15) besteht, die über einen Scharnierbolzen gelenkig miteinander verbunden sind, wobei jeder an den Türflügel (12, 13) anschlagbare Scharnierarm (15) eines Scharniers (14) aus einem Befestigungsprofilabschnitt (16) und einem den Scharnierbolzen aufnehmenden Lagerprofilabschnitt (17) besteht, und dass der Befestigungsprofilabschnitt (16) und der Lagerprofilabschnitt (17) formschlüssig miteinander verbunden sind.

## Beschreibung

Die Erfindung bezieht sich auf eine Tür für einen Aufbau eines Nutzfahrzeuges mit zwei Türflügeln, die mit ihren einander abgewandt liegenden Randbereichen durch mindestens zwei beabstandete Scharniere an dem Aufbau anschlagbar sind, wobei jedes Scharnier aus zwei Scharnierarmen besteht, die über einen Scharnierbolzen gelenkig miteinander verbunden sind.

Die Tür des Aufbaus kann sowohl für Lastkraftwagen als auch für Anhänger oder Aufleger eingesetzt werden. Im geschlossenen Zustand der Tür werden die Türflügel über entsprechende Beschläge oder Verriegelungselemente gesichert. Ein Scharnierarm jedes Scharniers ist in an sich bekannter Weise am Randbereich des Türflügels angeschlagen und der andere Scharnierarm als Gegenstück ist am Heckrahmen des Aufbaus angeschlagen. Dieser Scharnierarm kann auch in entsprechende Rungen oder Profile des Aufbaus eingesetzt werden.

Bei den Aufbauten von Nutzfahrzeugen besteht die Forderung, dass die Türflügel aus der Schließstellung heraus bis in eine zu der zugehörigen Seitenwand parallele oder annähernd parallele Öffnungsstellung bewegt werden können. Das bedeutet, dass der Türflügel um einen Winkel von 270° oder um annähernd 270° verschwenkt werden muss. Um dieser Forderung gerecht zu werden, sind sogenannte Doppelgelenkscharniere bekannt, d.h. diese Scharniere sind mit jeweils zwei achsparallelen Scharnierbolzen ausgestattet. Demzufolge sind diese Doppelgelenkscharniere konstruktiv aufwändig und dementsprechend kostenintensiv. Aus diesem Grund werden möglichst sogenannte einfache Scharniere mit nur jeweils einem Scharnierbolzen bevorzugt eingesetzt.

Bei einem vorbekannten Aufbau erstreckt sich der an dem Türflügel angebrachte Scharnierarm an einer Türkante entlang. Dieser Scharnierarm ist ein Strangpressteil und an einem Ende mit Rastelementen versehen, die im montierten Zustand mit einem Flügelprofil der Tür verbunden sind.

Nachteilig ist bei diesem vorbekannten kofferartigen Aufbau die Verrastung des flügelseitigen Scharnierarms mit dem Türprofil, so dass zusätzliche Sicherungsmaßnahmen notwendig sind.

Der Erfindung liegt die Aufgabe zugrunde, eine Tür für einen Aufbau eines Nutzfahrzeuges der eingangs näher beschriebenen Art so auszubilden, dass jedes Scharnier konstruktiv einfach aufgebaut ist, dass jedoch die im Fahrzeugbau notwendige Sicherheit gegeben ist, und dass jeder Türflügel in die geforderte Offenstellung geschwenkt werden kann. Zusätzlich soll das Scharnier in der Höhe variabel einstellbar sein und gegenüber den Scharnieren gemäß dem Stand der Technik nicht auf wenige Abstände festgelegt sein.

Die gestellte Aufgabe wird dadurch gelöst, dass jeder an dem Türflügel anschlagbare Scharnierarm eines Scharniers aus einem Befestigungsprofilabschnitt und einem den Scharnierbolzen aufnehmenden Lagerprofilabschnitt besteht, und dass der Befestigungsprofilabschnitt und der Lagerprofilabschnitt formschlüssig miteinander verbunden sind.

Nunmehr besteht der an dem Türflügel angeschlagene Scharnierarm des Scharniers aus den beiden Bauteilen, die formschlüssig miteinander verbunden sind, so dass eine feste Verbindung zwischen dem Befestigungsprofilabschnitt und dem Lagerprofilabschnitt gegeben ist. Dabei kann insbesondere der Lagerprofilabschnitt so gestaltet sein, dass ein Schwenkwinkel des Türflügels um annähernd 270° möglich ist. Das Scharnier kann universell eingesetzt und an jeder Stelle des Türflügels bzw. des Heckrahmens angeschlagen werden.

In Weiterführung dieses Gedankens ist vorgesehen, dass die Bohrung des Lagerprofilabschnittes zur Aufnahme des Scharnierbolzens im Versatz zur Anlagefläche des Befestigungsprofilabschnittes steht. In dieser Ausführung ist dann vorgesehen, dass die Bohrung im Abstand zur Tür des Aufbaus steht. Dadurch ist sinngemäß die Bohrung zur Aufnahme des Scharnierbolzens nach hinten versetzt, wodurch der Schwenkwinkel von 270° oder annähernd 270° möglich ist.

In einer bevorzugten Ausführung ist vorgesehen, dass die formschlüssige Verbindung zwischen dem Befestigungsprofilabschnitt und dem Lagerprofilabschnitt durch eine Nut und ein darin schließend eingesetztes Profil des Lagerprofilabschnittes gebildet ist.

Die Nut und das Profil des Lagerprofilabschnittes können vielfältig gestaltet sein. So ist in einer ersten Ausführung vorgesehen, dass die Nut als T-Nut und das eingesetzte Scharnier ein T-Profil ist. Alternativ ist es in einer zweiten Ausführung auch möglich, dass die Nut als zylindrische Bohrung mit einem Längsschlitz ausgebildet ist, in die das Profil des Scharniers schließend eingesetzt ist.

Zur vereinfachten Montage ist vorgesehen, dass die teilweise offene Nut der Endbereich des Befestigungsprofilabschnittes ist, der der Seitenwand des Aufbaues zugeordnet ist. Demzufolge ist das eingesetzte Profil am Lagerprofilabschnitt angesetzt oder angeformt.

Die Anordnung der Nut und des Profils des Scharnierprofils kann verschiedenartig sein. So kann beispielsweise die Nut am Befestigungsprofilabschnitt und das Profil als Gegenstück am Lagerprofilabschnitt vorgesehen sein. Alternativ ist auch die Umkehrung möglich, d.h., die Nut ist am Lagerprofilabschnitt und das Profil als Gegenstück am Befestigungsprofilabschnitt vorgesehen.

Damit der Befestigungsprofilabschnitt eine ausreichende Stabilität hat, ist vorgesehen, dass bei einer Tür für den Aufbau nach einem oder mehreren der vorstehenden Ansprüche der Befestigungsprofilabschnitt als Hohlkammerprofil mit mehreren Hohlkammern ausgebildet ist.

Anhand der beiliegenden Zeichnungen wird die Erfindung noch näher erläutert.

Es zeigen:

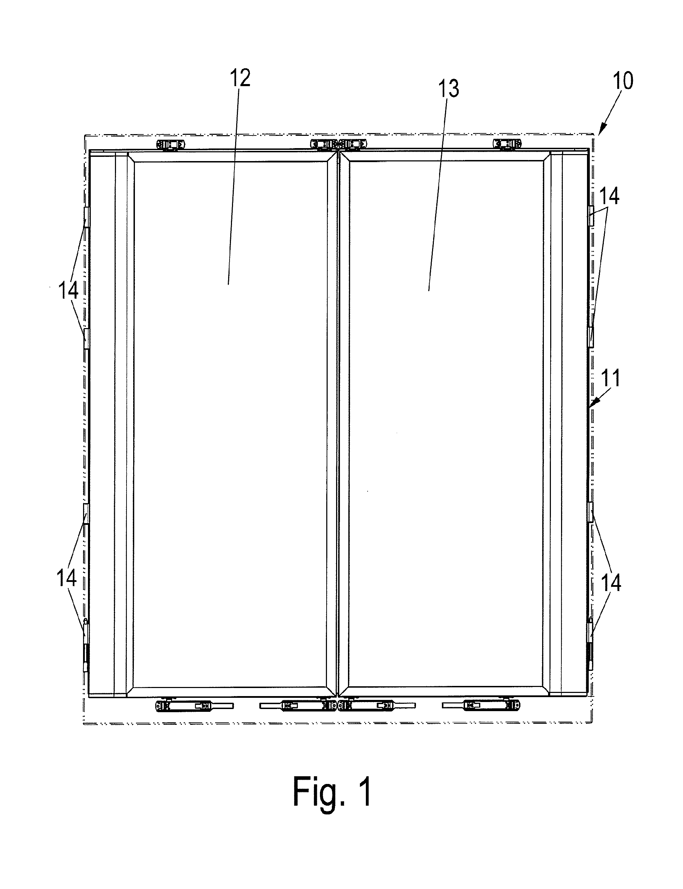

- Figur 1: rein schematisch eine Tür für den erfindungsgemäßen Aufbau mit Blick auf die Außenfläche in der geschlossenen Stellung der Türflügel,
- Figur 2: den Befestigungsprofilabschnitt und den Lagerprofilabschnitt als Einzelteile,
- Figur 3: den Befestigungsprofilabschnitt und den Lagerprofilabschnitt im zusammengesetzten Zustand,
- Figur 4: den Befestigungsprofilabschnitt und den Lagerprofilabschnitt in einer zweiten Ausführung als Einzelteile,
- Figur 5: den Befestigungsprofilabschnitt und den Lagerprofilabschnitt gemäß der Figur 4 im zusammengesetzten Zustand,
- Figur 6: den Befestigungsprofilabschnitt und den Lagerprofilabschnitt als Einzelteile in einer Variante zu den Ausführungen gemäß den Figuren 2 und 4,
- Figur 7: den Befestigungsprofilabschnitt und den Lagerprofilabschnitt gemäß der Figur 6 im zusammengesetzten Zustand.

Aus Gründen der vereinfachten Darstellung ist die erfindungsgemäße Tür 11 eines Aufbaus 10 eines Nutzfahrzeuges nur andeutungsweise durch die unterbrochenen Linien dargestellt. Die heckseitige Tür 11 besteht aus zwei Türflügeln 12, 13, die über andeutungsweise dargestellte Scharniere 14 an den Seitenwänden des Aufbaus 10 angeschlagen sind.

Jeder Türflügel 12, 13 besteht aus einem äußeren Trag- bzw. Grundrahmen und darin eingesetzten Füllungsplatten. Über nicht näher erläuterte Verriegelungselemente werden die Türflügel 12, 13 in der Schließlage gesichert.

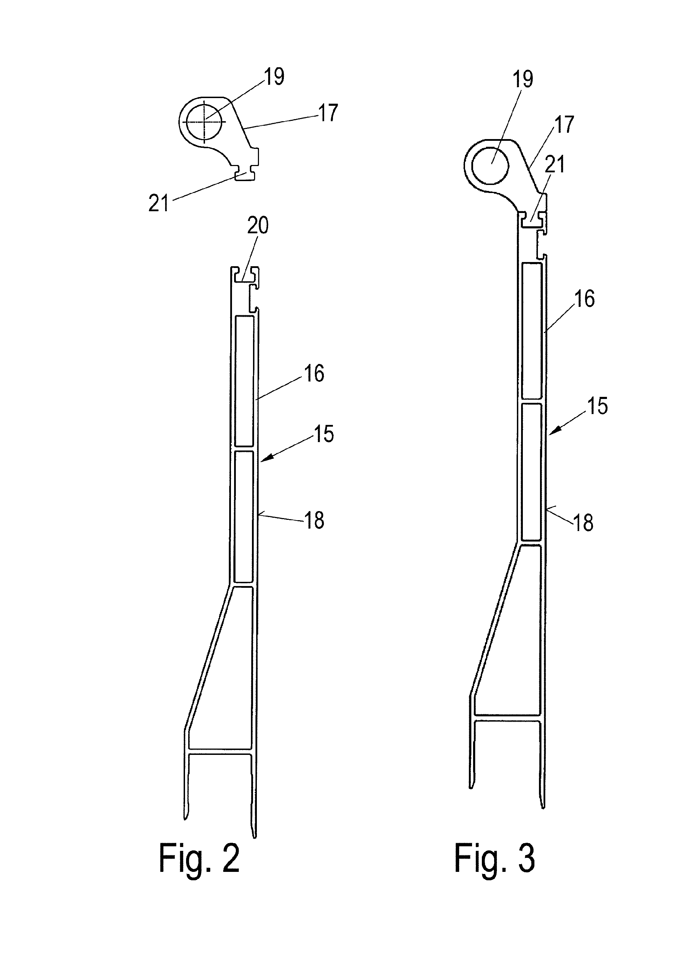

Wie die Figuren 2-5 zeigen, besteht jeder am Türflügel 12, 13 angeschlagene Scharnierarm 15 aus einem als Hohlkammerprofil ausgebildeten Befestigungsprofilabschnitt 16 und einem Lagerprofilabschnitt 17. Die Anlagefläche des Scharnierarms 15 ist durch das Bezugszeichen 18 gekennzeichnet.

Wie die Figuren 2-5 ferner zeigen, ist jeder Lagerprofilabschnitt 17 mit einer Bohrung 19 versehen, die zur Aufnahme des Scharnierbolzens dient. Das Gegenstück zum Lagerprofilabschnitt 17 des Scharniers 14 ist nicht dargestellt. Wie die Figuren 2-5 zeigen, ist jeder Befestigungsprofilabschnitt 16 an dem der Seitenwand des Aufbaus zugewandten Endbereich mit einer Nut versehen, die im montierten Zustand senkrecht steht und hinterschnitten ist. In diese Nut greift ein Profil des Lagerprofilabschnittes17 ein, welches daran angesetzt oder angeformt ist.

Bei der Ausführung nach den Figuren 2 und 3 ist die Nut als T-Nut 20 ausgebildet, wobei das Profil des Scharniers einen entsprechenden umgekehrten T-förmigen Querschnitt aufweist, so dass eine schließende Verbindung erfolgt.

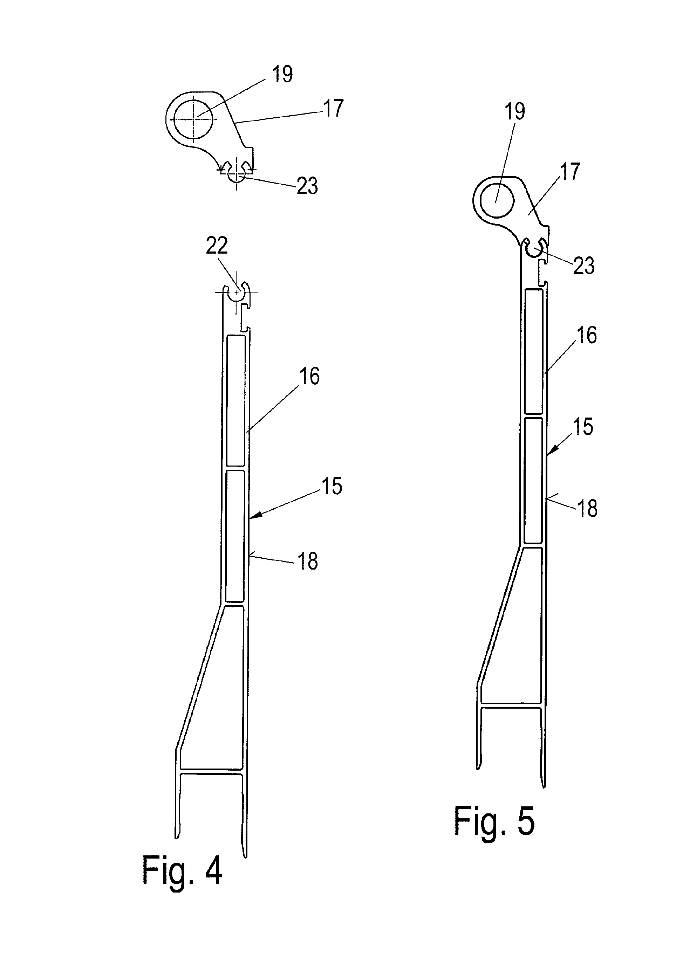

Bei der Ausführung nach den Figuren 4 und 5 ist die teilweise offene Nut eine zylindrische Nut 22 und demzufolge ist der das Profil des Scharniers ein entsprechendes Kreissegment 23.

Weitere formschlüssige Verbindungen sind ebenfalls möglich.

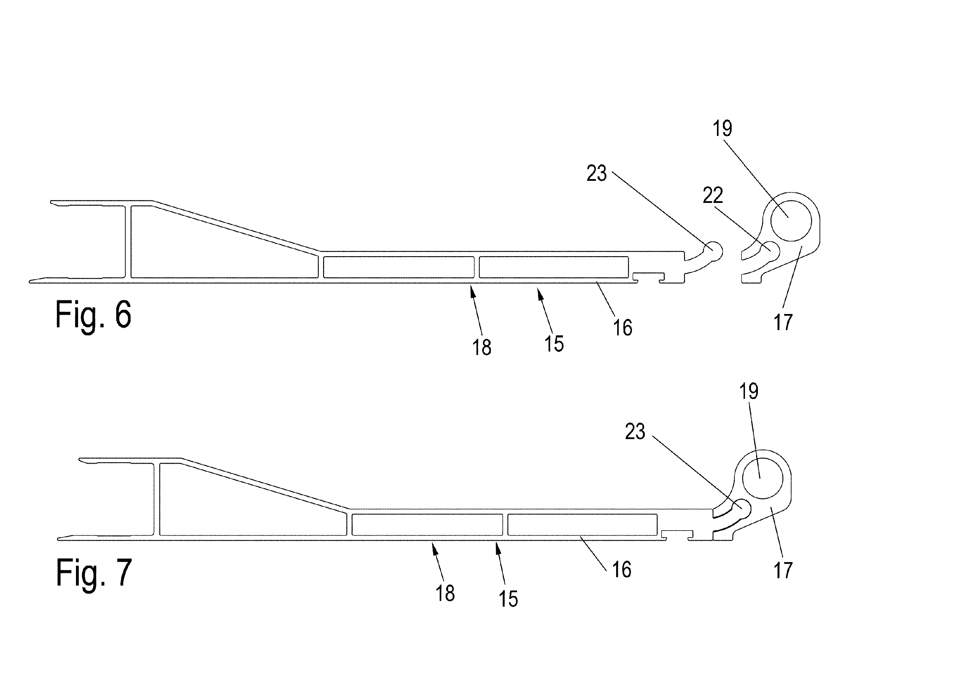

Die Figuren 6 und 7 zeigen die Umkehrung der formschlüssigen Verbindung zwischen dem Befestigungsprofilabschnitt 16 und dem Lagerprofilabschnitt 17.

Aus Gründen der vereinfachten Darstellung ist jedoch nur die Umkehrung gemäß den Figuren 4 und 5 dargestellt. Diese Umkehrung ist auch für die Ausführung nach den Figuren 2 und 3 möglich.

Die Figuren 6 und 7 zeigen, dass das Kreissegment 23 am Befestigungsprofilabschnitt 16 über einen Steg angeformt ist, und dass die Nut 22 in den Lagerprofilabschnitt 17 eingeformt ist.

Wie die Figuren 2-7 zeigen, wird die Breite jedes Scharnierarms 15 an dem den Nuten 20, 22 abgewandten Ende breiter.

Obwohl die Profile des Scharniers 21, 23 schließend in die Nuten 20, 22 eingreifen, kann eine zusätzliche Sicherung durch ein Klemmelement, beispielsweise durch ein das Profil des Scharniers 21, 23 kontaktierenden Stift vorgesehen sein.

Wie die Figuren 2-7 ferner noch zeigen, steht die jeweilige Bohrung 19 des Scharnierprofils17 im Versatz zur Anlagefläche 18 des Befestigungsprofilabschnittes 16. Im montierten Zustand steht die Bohrung 18 gegenüber der vertikalen Kante der Seitenwand vor, wodurch der benötigte Schwenkwinkel möglich ist.

Die Erfindung ist nicht auf das dargestellte Ausführungsbeispiel beschränkt. Wesentlich ist, dass jeder Scharnierarm 15 aus einem Befestigungsprofilabschnitt 16 und einem Scharnierprofil 17 besteht, und dass diese beiden Abschnitte formschlüssig miteinander verbunden sind. Dabei ist ferner wesentlich, dass keine Bewegung zwischen dem Befestigungsprofilabschnitt 16 und dem Scharnierprofil 17 möglich ist.

## Patentansprüche

1. Tür (11) für einen Aufbau (10) eines Nutzfahrzeuges, mit zwei Türflügeln (12, 13), die mit ihren einander abgewandt liegenden Randbereichen durch mindestens zwei beabstandete Scharniere (14) an dem Aufbau (10) anschlagbar sind, wobei jedes Scharnier (14) aus zwei Scharnierarmen (15) besteht, die über einen Scharnierbolzen gelenkig miteinander verbunden sind, **dadurch gekennzeichnet, dass** jeder an den Türflügel (12, 13) anschlagbare Scharnierarm (15) eines Scharniers (14) aus einem Befestigungsprofilabschnitt (16) und einem den Scharnierbolzen aufnehmenden Lagerprofilabschnitt (17) besteht, und dass der Befestigungsprofilabschnitt (16) und der Lagerprofilabschnitt (17) formschlüssig miteinander verbunden sind.

2. Tür für einen Aufbau nach Anspruch 1, **dadurch gekennzeichnet, dass** die Bohrung (19) des Lagerprofilabschnittes (17) zur Aufnahme des Scharnierbolzens im Versatz zur Anlagefläche (18) des Befestigungsprofilabschnittes (16) steht.

3. Tür für einen Aufbau nach Anspruch 2, **dadurch gekennzeichnet, dass** die Bohrung (19) zur Aufnahme des Scharnierbolzens im Abstand zur Tür (11) des Aufbaus (10) steht.

4. Tür für einen Aufbau nach einem oder mehreren der vorstehenden Ansprüche, **dadurch gekennzeichnet, dass** die formschlüssige Verbindung zwischen dem Befestigungsprofilabschnitt (16) und dem Lagerprofilabschnitt (17) durch eine Nut (20, 22) und ein darin schließend eingesetztes Profil (21, 23) des Lagerprofilabschnittes (17) gebildet ist.

5. Tür für einen Aufbau nach Anspruch 4, **dadurch gekennzeichnet, dass** die Nut als T-Nut (20) und dass das Profil des Scharnierprofils als im Querschnitt T-förmiges Profil des Scharniers (14) ausgebildet ist.

6. Tür für einen Aufbau nach Anspruch 4, **dadurch gekennzeichnet, dass** die Nut als zylindrische Bohrung (22) mit einem Längsschlitz ausgebildet ist, und dass das Profil des Lagerprofilabschnittes (17) des Scharniers (14) als schließend darin eingesetztes Kreissegment (23) ausgebildet ist.

7. Tür für einen Aufbau nach einem oder mehreren der vorstehenden Ansprüche, **dadurch gekennzeichnet, dass** die Nut (20, 22) am Befestigungsprofilabschnitt (16) und das Profil (21, 23) am Lagerprofilabschnitt (17) vorgesehen ist, oder dass die Nut (20, 22) am Lagerprofilabschnitt (17) und das Profil am Befestigungsprofilabschnitt (16) vorgesehen ist.

8. Tür für einen Aufbau nach einem oder mehreren der vorstehenden Ansprüche, **dadurch gekennzeichnet, dass** der Befestigungsprofilabschnitt (15) als Hohlkammerprofil mit mehreren Hohlkammern ausgebildet ist.
